# EUROPEAN PATENT APPLICATION

(11) **EP 4 718 138 A1**
(43) Date of publication of application: **01.04.2026**
(21) Application number: 24202647.4
(22) Date of filing: 25.09.2024
(51) Int. Cl.: G02B 21/00, G02B 27/12, G02B 27/10, G02B 27/58

(54) **DETECTION ARRANGEMENT, CASCADED DETECTION ARRANGEMENT, AND OPTICAL SCANNING MICROSCOPE**

(71) Applicant: Leica Microsystems CMS GmbH, 35578 Wetzlar (DE)
(72) Inventor: Friedrich, Lars, 35578 Wetzlar (DE); Dasgupta, Anindita, 35578 Wetzlar (DE)
(74) Representative: Schaumburg und Partner Patentanwälte mbB

(57) **Abstract**

A detection arrangement (102, 302, 402, 602, 704, 806) for an optical scanning microscope (100, 300, 400, 600, 700, 800) comprises a beam splitting element (120) configured to receive descanned detection light (118), to direct a first part (118a) of the detection light (118) having a first wavelength range into a first beam path (128a), and to direct a second part (118b) of the detection light (118) having a second wavelength range different from the first wavelength range into a second beam path (128b). The first beam path (128a) comprises a first array detector (124a) configured to receive the first part (118a) of the detection light (118), and the second beam path (128b) comprises a second array detector (124b) configured to receive the second part (118b) of the detection light (118). The detection arrangement (102, 302, 402, 602, 704, 806) further comprises an upstream dispersive element (126, 804) arranged upstream of the beam splitting element (120) and configured to spectrally separate the descanned detection light (118).

## Description

### Technical field

The invention relates to a detection arrangement for an optical scanning microscope, and to a cascaded detection arrangement for an optical scanning microscope. The invention further relates to an optical scanning microscope.

### Background

Image Scanning Microscopy (ISM) is an advanced fluorescence microscopy technique that improves the spatial resolution and signal-to-noise ratio beyond the capabilities of traditional confocal microscopy. In conventional confocal microscopy, a single point detector, such as a single photomultiplier tube, is used to detect the fluorescent light emitted from the sample. In the ISM approach, the point detector is replaced by a multi-element photodetector comprising a plurality of photodetector elements (pixels) arranged in a photodetector array. Each photodetector element in the array is configured to output a detector signal upon receiving, for example fluorescent light. As the sample is scanned with a laser focus, each photodetector element detects a small image of the illuminated sample at each scan position. Appropriate algorithms are then used to combine multiple small images to reconstruct a single high-resolution image of the sample.

While it is possible to use the information from the different photodetector elements to increase spatial image resolution and signal-to-noise ratio, one of the major limitations of current ISM is the limited usability of these photodetectors for quantifying the emitted fluorescence light in terms of its spectral content. Existing solutions, for example as described in F. Strasser et al., Spectral image scanning microscopy, Biomed. Opt. Expr 10 (2019) 2513, are limited to a narrow band of the visible light spectrum and suffer from light loss due to the generation of higher diffraction orders and the use of only one polarization state.

### Summary

It is an object to provide a detection arrangement for an optical scanning microscope, a cascaded detection arrangement for an optical scanning microscope, and an optical scanning microscope that enable spectral imaging with high spatial resolution and a high signal-to-noise ratio.

The proposed detection arrangement for an optical scanning microscope comprises a beam splitting element. The beam splitting element is configured to receive descanned detection light, to direct a first part of the detection light having a first wavelength range into a first beam path, and to direct a second part of the detection light having a second wavelength range different from the first wavelength range into a second beam path. The first beam path comprises a first array detector configured to receive a first part or the first part of the detection light, and the second beam path comprises a second array detector configured to receive a first part or the second part of the detection light. The detection arrangement further comprises an upstream dispersive element arranged upstream of the beam splitting element and configured to spectrally separate the descanned detection light.

In the context of this document, upstream means toward the source of the incoming detection light, or in other words, against the direction of propagation of the detection light. Likewise, downstream means in the direction of propagation of the detection light. The detection arrangement is configured to receive the detection light from a descanned arrangement and may therefore be used as the detection arrangement on an existing confocal laser scanning microscope or image scanning microscope, for example.

The descanned detection light will typically correspond to the image of a small particle, which emits the detection light, for example fluorescence light, as a result of being scanned with a beam of focused illumination light, such as a laser focus used to excite fluorophores. Due to the point-like nature of the source of the detection light, the image of the small particle will exhibit an Airy pattern and is therefore also called Airy disk in the following. If an extended object can be decomposed into a superposition of a plurality of point objects, then each of these point objects has an image in the shape of an airy disc. Therefore, the Airy disc might be treated as a basis for describing any imaging situation. Different wavelengths of the detection light usually form Airy disks of different sizes. Thus, the sampling of Airy disks with different wavelengths will be different using an array detector with a constant pixel pitch. A smaller Airy disk will be detected by fewer pixel of the array detector than a larger disk. This can lead to an oversampling of large Airy disks and to an undersampling of small Airy disks, or equivalently, an oversampling of longer wavelengths of the detection light and an undersampling of shorter wavelengths of the detection light. For example, in Castello, M., Tortarolo, G., Buttafava, M. et al., A robust and versatile platform for image scanning microscopy enabling super-resolution FLIM, Nat Methods 16, 175-178 (2019) an Airy disc is sampled with 5x5 pixels. It has been recognized that this problem can be addressed by providing different array detectors for different wavelength ranges.

The descanned detection light is split into the first and second parts by the beam splitting element based on the wavelengths of the detection light. Wavelengths in the first wavelength range are directed into the first beam path and are captured by the first array detector. Likewise, wavelengths in the second wavelength range are directed into the second beam path and are captured by the second array detector. The first and second array detectors provide spatial information in addition to intensity information. This makes it possible to image the Airy disks of the first and second parts of the detection light. The images of the Airy disks at different scan positions may then be reconstructed into a single high-resolution image of the sample using algorithms known from image scanning microscopy.

In this embodiment of the detection arrangement, the descanned detection light is directed through the upstream dispersive element before it is received by the beam splitting element. If the detection light comprises a wide band of wavelengths, the upstream dispersive element spectrally fans out the detection light along a spectral separation direction. However, if the detection light is monochromatic or is comprised of a narrow wavelength band, as is sometimes the case in fluorescence microscopy, the upstream dispersive element deflects the beam of the detection light in the spectral separation direction rather than fanning the detection light out. The deflection of the detection light by the upstream dispersive element translates to a different position of the Airy disk on the first and second array detectors for different wavelengths. Thus, based on the deflection by the upstream dispersive element, it is therefore possible to draw conclusions about the spectral composition of the detection light.

By using two array detectors arranged in different beam paths, the optical system and the array detectors themselves can be adapted to the specific wavelength range detected in the respective beam path. For example, the pixel pitch of the first and second array detectors may be adapted to the expected sizes of the Airy disks in the first and second wavelength ranges, respectively. Thereby, the proposed detection arrangement not only enables image scanning microscopy with high spatial resolution and a high signal-to-noise ratio by detecting the detection light using the two array detectors. The proposed detection arrangement further enables flexible spectral detection for a large range of wavelengths (about 1 octave or larger) without the significant loss of detection light, which would compromise the signal-to-noise ratio.

In an embodiment, the detection arrangement comprises at least one further dispersive element. The at least one further dispersive element may be arranged in the first beam path and configured to spectrally separate the first part of the detection light. The at least one further dispersive element may also be arranged in the second beam path and configured to spectrally separate the second part of the detection light. The further dispersive element is used in addition to the upstream dispersive element to further modify the relation between the wavelength of the detection light and their spatial separation. In particular with prisms, the relation between wavelength and amount of deflection is typically nonlinear. This may lead to a non-uniform spectral resolution across the complete spectral range detected by the detection arrangement. To address this, the further dispersive element may be used to, for example, increase the spectral separation for longer wavelengths. Thus, the further dispersive element increases the spectral resolution of the detection arrangement.

In another embodiment, the proposed detection arrangement for an optical scanning microscope comprises the beam splitting element being configured to receive descanned detection light, to direct a first part of the detection light having a first wavelength range into a first beam path, and to direct a second part of the detection light having a second wavelength range different from the first wavelength range into a second beam path. The first beam path comprises a first dispersive element configured to spectrally separate the first part of the detection light, and the first array detector configured to receive the spectrally separated first part of the detection light. The second beam path comprises a second dispersive element configured to spectrally separate the second part of the detection light, and the second array detector configured to receive the spectrally separated second part of the detection light. In such an embodiment, the first and second dispersive elements may be used instead of the upstream dispersive element mentioned above to spectrally separate the detection light. The first and second dispersive elements may also be used in combination with the upstream dispersive element. The first and second dispersive elements make it possible to adapt the dispersive behavior of the first and second parts of the detection light to the first and second wavelength ranges, respectively. For example, a dispersive element having a stronger dispersion may be used for light having longer wavelengths in order to make the spectral separation more pronounced and easier to detect. Likewise, a dispersive element having a weaker dispersion may be used for light having shorter wavelengths in order to use the area of the array detector used for detecting the light having shorter wavelengths more effectively. Preferably, the detection arrangement is configured to simultaneously detect the first part of the detection light with the first array detector and to detect the second part of the detection light with the second array detector.

In an embodiment, the first beam path comprises at least one first focusing element configured to focus the first part of the detection light onto the first array detector. Alternatively, or additionally, the second beam path comprises at least one second focusing element configured to focus the second part of the detection light onto the second array detector. The first focusing element may be used to aid the formation of the image on the first array detector from the first part of the detection light. Likewise, the second focusing element may be used to aid in the formation of the image on the second array detector from the second part of the detection light. Alternatively, at least one focusing element may be arranged upstream of the beam splitting element in order to focus the first part of the detection light onto the first array detector and to focus the second part of the detection light onto the second array detector.

In another embodiment, a first focal length of the at least one first focusing element is shorter than a second focal length of the at least one second focusing element. Alternatively, the first focal length of the at least one first focusing element is longer than the second focal length of the at least one second focusing element. For a shorter focal length, the Airy disk appears smaller on the respective array detector. Thus, decreasing the focal length of the first focusing element or the second focusing element increases the effective pixel pitch of the first array detector or the second array detector, respectively. Likewise, increasing the focal length of the first focusing element or the second focusing element decreases the effective pixel pitch of the first array detector or second array detector, respectively. In other words, by varying the focal length it is, for example, possible to adjust the sampling with which the Airy disk is imaged in each of the first and second beam paths by the first and second array detector, respectively. This makes it possible to use components having a similar or identical pixel pitch for the first and second array detectors while still preventing under- and oversampling, making the detection arrangement easier to manufacture and maintain by using standardized components.

In another embodiment, the first beam path comprises a first magnification system configured to adjust a beam diameter in the first beam path. Alternatively, or additionally, the second beam path comprises a second magnification system configured to adjust a beam diameter in the second beam path. For example, at least one of the first and second magnification systems may comprise a telescope. The beam diameter is proportional to the size of an image on the respective array detector. Thus, the size of the Airy disks detected by the first and second array detectors may be adjusted using the first and second magnification systems, respectively. Furthermore, since the size of the airy discs can be defined using appropriate focal lengths of the first focusing element and/or the second focusing element, after choosing the size of the airy disc, the first and/or the second magnification system allows to adjust the beam diameter at the dispersive element separately. The beam diameter at the dispersive element influences the spectral resolution. For the same dispersive element (e. g. prism, grating), a larger beam diameter will increase the spectral resolution (using 'more grooves' of the grating makes better separation), even for the same size of the Airy disc. This makes it possible, for example to use the areas of the first and second array detectors more efficiently. This also makes it possible to adjust the effective pixel pitch of the first and second array detectors in order to prevent under- or oversampling.

In another embodiment, the first array detector comprises a first detector surface and a surface normal of the first detector surface is tilted by a first angle different from zero with respect to an optical axis in the first beam path. Alternatively, or additionally, the second array detector comprises a second detector surface and a surface normal of the second detector surface is tilted by a second angle different from zero with respect to an optical axis in the second beam path. By these means, it is possible to compensate for aberrations introduced by the dispersive element as well as an overall imaging system, for example of the optical scanning microscope, in particular being introduced by the objective lens. This especially allows to compensate for axial chromatic aberrations in a way that is usually not possible in a classic confocal microscope. In a classic confocal microscope, there is only one (axial) pinhole position that needs to fit all wavelengths. Here, different wavelengths are spatially separated (between the first and second beam path, respectively, and then on each of the first and second detector), so by tilting the first and/or the second detector, respectively, the effective (axial) pinhole position can be different for each wavelength, compensating for effects arising e. g. in the objective lens. Therefore, by tilting the first and/or second array detectors with respect to the respective optical axis, chromatic aberration can be reduced significantly.

In another embodiment, the first wavelength range comprises a first lower boundary, for example at 400 nm, and a first upper boundary, for example at 533 nm or 566 nm; and/or wherein the second wavelengths range comprises a second lower boundary, for example at 533 nm or 566 nm, and a second upper boundary, for example at 800 nm. All these boundaries and in particular the first lower boundary and the second upper boundary may be chosen based on the range of the emission spectra of a fluorescent species of interest. The first lower boundary and the second upper boundary may also be chosen based on other requirements of the optical system that is formed by the detection arrangement, for example the spectral sensitivity of the first and second array detectors. The second lower boundary may be identical to the first upper boundary. By choosing the second lower boundary to be identical to the first upper boundary, the full wavelength range between the first lower boundary and the second upper boundary can be detected using the detection arrangement. The wavelength at the first upper boundary and the second lower boundary splits the complete spectral range detected by the detection arrangement into the first wavelength range and the second wavelength range. Therefore, the wavelength at the first upper boundary and the second lower boundary is also called the splitting wavelength. The splitting wavelength may be chosen to optimize Airy disk sampling. In this case the choice depends on the pixel pitches of the first and second array detectors. In case of an equal pixel pitch, an advantageous choice for the splitting wavelength may be the geometrical middle of the complete spectral range. Thereby, the ratio of smallest Airy disk diameter to largest Airy disk diameter is equal for the first and second array detectors. The splitting wavelength may also be chosen to optimize spectral resolution. In this case, the choice depends on the dispersive properties of the dispersive elements. In an example the splitting wavelength is chosen as the wavelength that splits the wavelength-to-dispersion-angle-curve, for example of the dispersive element, into two dispersion-angle ranges of equal widths. Typically, the optimal splitting wavelength will be lower than the arithmetic middle of the complete spectral range in both cases.

In another embodiment, the detection arrangement comprises a spatial filter, in particular a pinhole. The spatial filter may be arranged upstream of the beam splitting element. The spatial filter may also be arranged downstream of the beam splitting element and upstream of the further dispersive element, the first dispersive element, or the second dispersive element. In particular, the detection arrangement may comprise at least one spatial filter in each of the first beam path and the second beam path. By arranging the spatial filter as such, different pinhole sizes may be chosen in the first and second beam paths, making it possible to adapt the pinhole size to the first and second wavelength ranges, respectively. The spatial filter excludes out-of-focus light, thereby enhancing the imaging quality. Other spatial filters may be used instead of or in addition to the pinhole, for example a digital mirror device (DMD) or other spatial light modulators (SLM).

In another embodiment, at least one of the first array detector and the second array detector comprises at least one time resolved detector element configured to detect a photon arrival time. This enables the detection arrangement to determine a fluorescence lifetime of a fluorophore species of interest. An excitation light source of the image scanning microscope using the detection arrangement may be configured to generate the excitation light from pulsed laser light. By recording the arrival times of individual photons with respect to a laser pulse generated by the excitation light source, it is possible to determine fluorescence lifetime characteristics of the fluorophore species of interest.

In another embodiment, the first and second array detectors each comprise a two-dimensional array of photodetector elements. The two-dimensional array of photodetector elements may be a SPAD-array or SiPM-array, for example. SPAD stands for single-photon avalanche diodes and refers to a type of photodetector element characterized by their high sensitivity, their fast timing resolution, and their ability to detect single photons with high efficiency. An advantage of the SPAD-array is its capability for fast single-photon detection and precise time-resolved measurements, making it possible for the SPAD-array to be used as a time resolved detector element for detecting photon arrival times, for example. SiPM stands for Silicon Photomultiplier, another type of photodetector element, which are based on SPADs. Advantages of SiPMs include a low signal-to-noise ratio, a high gain, a low operating voltage, their compact size, and their robustness. Like the SPAD-array, the SiPM-array enable fast single-photon detection and may be used as the time resolved detector element.

In another embodiment, at least one of the upstream dispersive element, the further dispersive element, the first dispersive element, and the second dispersive element comprises at least one of a dispersing prism, a planar grating, preferably a blazed grating, a grism, and a diffractive optical element. Dispersion prisms work with light in a broad wavelength range that includes the visible spectrum and part of the infrared and ultraviolet spectrum. Further, dispersing prisms do not generate higher orders of diffraction that can occur with diffraction gratings. The higher orders may not be picked up by the first and second array detectors. Thus, using dispersing prisms prevents light loss and improves the signal to noise ratio. In particular blazed gratings offer a high diffraction efficiency in a predetermined diffraction order, which reduces light loss and improves the signal-to-noise ratio. Grisms combine a dispersing prism with a grating and exhibit a very low chromatic aberration. Diffractive optical elements allow for more complex light manipulation, making it possible to control the beam shape, providing precise control over the phase and amplitude of the detection light.

The invention also relates to a cascaded detection arrangement. The cascaded detection arrangement comprises at least two detection arrangements arranged in sequence. Each detection arrangement except a final detection arrangement is arranged in a first beam path of the preceding detection arrangement. The final detection arrangement is the detection arrangement described above. The remaining detection arrangements each comprise a beam splitting element configured to receive light, which is either the descanned detection light or a part thereof, to direct a first part of the received light having a first wavelength range into a first beam path, and to direct a second part of the received light having a second wavelength range different from the first wavelength range into a second beam path. The second beam path of each of the remaining detection arrangements comprises an array detector configured to receive the spectrally separated second part of the received light. The second beam path of at least one of the remaining detection arrangements comprises a dispersive element configured to spectrally separate the second part of the received light. Alternatively, or additionally, the cascaded detection arrangement comprises an upstream dispersive element arranged upstream of the beam splitting element of a first of the remaining detection arrangements and configured to spectrally separate the descanned detection light.

In the cascaded detection arrangement, the first part of the received light of a preceding detection arrangement is directed into the subsequent detection arrangement. Using the detection arrangement described above, two wavelength ranges may be investigated separately using the first and second array detectors. The cascaded detection arrangement makes it possible to increase the number of wavelength ranges that may be investigated. In addition to that, the cascaded detection arrangement has the same advantages as the detection arrangement described above. In particular, the cascaded detection arrangement may be supplemented with the features described in this document in connection with the detection arrangement. Furthermore, the detection arrangement may be supplemented with the features described in this document in connection with the cascaded detection arrangement.

The invention further relates to an optical scanning microscope. The optical scanning microscope comprises an excitation light source configured to generate excitation light, and an objective lens directed at a sample space and configured to direct the excitation light into the sample space and to receive the detection light from the sample space. The optical scanning microscope also comprises a scanning unit arranged along a beam path between the excitation light source and the objective lens and configured to selectively direct the excitation light into different regions of the sample space via the objective lens, and the detection arrangement or the cascaded detection arrangement described above. The optical scanning microscope further comprises a main beam splitter configured to direct the excitation light into the objective lens via the scanning unit, and to direct the detection light into the detection arrangement or the cascaded detection arrangement.

The optical scanning microscope has the same advantages as the detection arrangement and the cascaded detection arrangement described above. In particular, the optical scanning microscope may be supplemented with the features described in this document in connection with the detection arrangement and/or the cascaded detection arrangement. Furthermore, the detection arrangement and the cascaded detection arrangement described above may be supplemented with the features described in this document in connection with the optical scanning microscope.

In an embodiment the main beam splitter comprises at least one of an acousto-optical beam splitter, an acousto-optical tunable filter and a dichroic beam splitter. The excitation light may be reflected in the sample space and by passing the main beam splitter leak into the detection arrangement. The acousto-optical beam splitter and the acousto-optical tunable filter can be controlled to selectively deflect certain wavelengths or wavelength bands. This property may be used in this embodiment to deflect the leaked excitation light away from the detection arrangement. An exemplary main beam splitter comprising an acousto-optical device is disclosed in WO 99/42884 A1. The dichroic beam splitter can be used in similar fashion to deflect the wavelengths of the excitation light away from the detection arrangement. An optical filter and/or a filter wheel may also be used to block the excitation light from entering the detection arrangement to the same effect.

In another embodiment, the excitation light source comprises a super-continuum laser. The excitation light source may further comprise exchangeable filters or an acousto-optical device to select specific wavelengths from the laser light generated by the super-continuum laser as the excitation light. In this embodiment, it is possible to dynamically generate laser light with multiple different wavelengths as the excitation light. This makes it possible to adapt the excitation light to the excitation spectra of many different fluorophores, making the optical scanning microscope even more versatile. In addition, or as an alternative to the super-continuum laser, the excitation light source may comprise multiple single-wavelength lasers.

In another embodiment the excitation light source is a pulsed laser light source and at least one of the first array detector and the second array detector comprises at least one time resolved detector element configured to detect a photon arrival time with respect to a laser pulse generated by the excitation light source. By recording the arrival times of individual photons with respect to a reference signal, it is possible to determine fluorescence lifetime characteristics using the optical scanning microscope. This makes it possible to use the optical scanning microscope for fluorescence microscopy applications such as Fluorescence Lifetime Imaging Microscopy (FLIM). Additionally or alternatively, another application of a time resolved measurement together with pulsed excitation laser light might be used to exclude e.g. undesired reflected light from the detection by temporal gating / weighting.

### Short Description of the Figures

Hereinafter, specific embodiments are described referring to the drawings, wherein:
- Figure 1: is a schematic view of an optical scanning microscope having a detection arrangement according to an embodiment;
- Figure 2a: is a schematic view of a surface of the first array detector of the detection arrangement according to Figure 1;
- Figure 2b: is a schematic view of a surface of the second array detector of the detection arrangement according to Figure 1;
- Figure 3: is a schematic view of an optical scanning microscope having a detection arrangement according to an embodiment comprising a further dispersive element;
- Figure 4: is a schematic view of an optical scanning microscope having a detection arrangement according to an embodiment comprising two dispersive elements arranged in different beam paths;
- Figure 5a: is a schematic view of a surface of the first array detector of the detection arrangement according to Figure 4;
- Figure 5b: is a schematic view of a surface of the second array detector of the detection arrangement according to Figure 4;
- Figure 6: is a schematic view of the optical scanning microscope having a detection arrangement according to another embodiment comprising a magnification system;
- Figure 7: is a schematic view of the optical scanning microscope having a cascaded detection arrangement according to an embodiment; and
- Figure 8: is a schematic view of the optical scanning microscope having a cascaded detection arrangement according to another embodiment comprising an upstream dispersive element.

### Detailed Description of the Figures

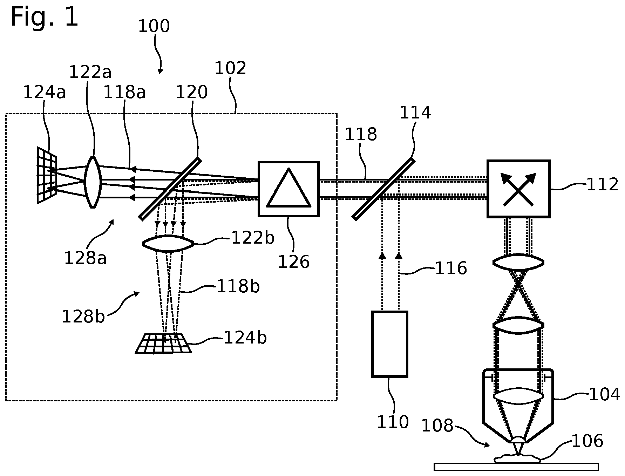

Figure 1 is a schematic view of an optical scanning microscope 100 having a detection arrangement 102 according to an embodiment. The optical scanning microscope 100 exemplary comprises a single objective lens 104 directed at a sample 106 arranged in a sample space 108. The optical scanning microscope 100 further comprises an excitation light source 110, a scanning unit 112, and a main beam splitter 114.

The excitation light source 110 is configured to generate excitation light 116, for example laser light with a single wavelength or a narrow wavelength band. For this, the excitation light source 110 may comprise one or more lasers. Each laser may be configured to generate laser light having one single wavelength or a narrow wavelength band. In an embodiment, the excitation light source 110 may comprise a continuum laser and an arrangement of exchangeable filters or at least one tunable laser to selectively generate excitation light 116 with different wavelengths. In another embodiment, the excitation light source 110 may be configured to generate modulated light, for example pulsed light. The excitation light source 110 may comprise further optical elements such as lenses and apertures for forming a light beam from the excitation light 116, which are not shown in Figure 1.

The excitation light 116 generated by the excitation light source 110 is directed by the main beam splitter 114 towards the scanning unit 112. The scanning unit 112 is configured to deflect the excitation light 116 to selectively direct the excitation light 116 into different regions of the sample space 108 via the objective lens 104, for example in a meandering fashion. This makes it possible to successively illuminate the sample 106 at different scan positions using the excitation light 116 focused by the objective lens 104. To deflect the excitation light 116, the scanning unit 112 may comprise one or more galvanometric mirrors or acousto-optic deflectors, for example. The beam path of the excitation light 116 is shown in Figure 1 using dotted lines originating at the excitation light source 110 and ending at the sample 106.

Detection light 118 is generated by illuminating the sample 106 using the excitation light 116. In an embodiment, the excitation light 116 excites fluorophores arranged in the sample 106, which emit fluorescence light as the detection light 118. The detection light 118 emitted by the fluorophore species is collected by the objective lens 104 and directed back towards the main beam splitter 114 via the scanning unit 112. Due to the arrangement of the scanning unit 112 between the main beam splitter 114 and the objective lens 104, the deflection of the excitation light 116 is reversed for the detection light 118. This directs the detection light 118 towards a single point regardless of a deflection angle of the scanning unit 112. In other words, the detection light 118 has been descanned, and is, for example, is a static light beam. The descanned detection light 118 is then directed by the main beam splitter 114 into the detection arrangement 102. The beam path of the detection light 118 is shown in Figure 1 using solid and dashed lines originating at the sample 106.

In the embodiment shown in Figure 1, the detection arrangement 102 comprises a beam splitting element 120, a first focusing element 122a, a first array detector 124a, a second focusing element 122b, a second array detector 124b, and an upstream dispersive element 126. The detection light 118 is received by the detection arrangement 102 via the upstream dispersive element 126 in the embodiment shown in Figure 1. The upstream dispersive element 126 spectrally separates the detection light 118 along a spectral separation direction by deflecting the detection light 118 based on the wavelength of the detection light 118. Thereby, the upstream dispersive element 126 alters the spatial distribution of the detection light 118 based on the wavelength of the detection light 118. For example, the upstream dispersive element 126 may deflect shorter wavelengths more than longer wavelengths. For this purpose, the upstream dispersive element 126 may comprise one or more of the following: a dispersing prism, a planar grating, preferably a blazed grating, a grism, and a diffractive optical element.

The spectrally separated detection light 118 is then received by the beam splitting element 120 arranged downstream of the upstream dispersive element 126. The beam splitting element 120 is configured to separate the detection light 118 by wavelength, thereby splitting the detection light 118 into a first part 118a having a first wavelength range and a second part 118b having a second wavelength range. The first wavelength range and the second wavelength range are different. In an embodiment, an upper boundary of the first wavelength range is close to or identical to a lower boundary of the second wavelength range. This ensures that a continuous spectral range can be detected by the detection arrangement 102. The first part 118a of the spectrally separated detection light 118 is directed into a first beam path 128a and the second part 118b of the spectrally separated detection light 118 is directed into a second beam path 128b. This is shown in Figure 1 by the solid line continuing into the first beam path 128a and the dashed line being deflected into the second beam path 128b by the beam splitting element 120. In the first beam path 128a, the first part 118a of the detection light 118 is directed onto the first array detector 124a so that an image is formed on the first array detector 124a. Likewise, in the second beam path 128b, the second part 118b of the detection light 118 is directed onto the second array detector 124b so that an image is formed on the second array detector 124b.

Each of the first and second array detectors 124a, 124b comprises an array of photodetector elements, preferably a two-dimensional array of photodetector elements, for example photodiodes such as single-photon avalanche diodes (SPAD), or photomultiplier tubes (PMT) such as gallium arsenide phosphide (GaAsP) PMT. At least one of the photodetector elements of at least one of the first and second array detectors 124a, 124b may be configured to determine a photon arrival time of a photon of the detection light 118. Each photodetector element acts as a single pixel detector that captures part of the spectrally separated detection light 118 at a different position in the array. Thus, the first and second array detectors 124a, 124b make it possible to detect the spatial distribution of the intensity of the first and second parts 118a, 118b of the spectrally separated detection light 118. As the sample 106 is scanned with the excitation light 116, at least one spatial distribution is detected at each scan position by at least one of the first and second array detectors 124a, 124b. From the collection of the spatial distributions a single high-resolution image of the sample 106 can be reconstructed. This imaging technique is known as Image Scanning Microscopy (ISM), which has an increased spatial resolution and signal-to-noise ratio compared to conventional Confocal Laser-Scanning Microscopy (CLSM). Further, since the spatial distribution of the detection light 118 has been modulated by the upstream dispersive element 126 based on the wavelength of the detection light 118, a spectral information can be reconstructed from the spatial distributions detected by the first and second array detectors 124a, 124b. For example, in the case of monochromatic detection light 118, the wavelength of the monochromatic detection light 118 may be determined from the point of incidence of the first or second part 118a, 118b of the detection light 118 on the first array detector 124a or the second array detector 124b respectively.

The first and second array detectors 124a, 124b may be adapted to specifically detect the first and second wavelength ranges, respectively. For example, the first and second array detectors 124a, 124b may have spectral sensitivities adapted to detect the first and second wavelength ranges, respectively. Further, the pixel pitches of the first and second array detectors 124a, 124b may be chosen to prevent under- and oversampling of the Airy disks corresponding to the image of a point-like source of the detection light 118 in the first and second wavelength ranges, respectively. Likewise, the first and second focusing elements 122a, 122b may be adapted to facilitate a good spectral separation of the first and second parts 118a, 118b of the detection light 118 on the first and second array detectors 124a, 124b. In an embodiment, the second wavelength range comprises larger wavelengths than the first wavelength range. In such an embodiment, the focal length of the second focusing element 122b may be decreased to decrease the size of the Airy disk formed by the image of a point-like source of the detection light 118. In other words, the focal length of the second focusing element 122b may be decreased to increase the effective pixel pitch of the second array detector 124b. With increasing wavelength, the Airy disk formed by the image of the point-like source of the detection light 118 will be larger. Increasing the pixel pitch therefore prevents an oversampling of the second wavelength range. Thus, by adapting the first and second array detectors 124a, 124b and the first and second focusing elements 122a, 122b to the first and second wavelength ranges, respectively, it is possible for the detection arrangement 102 to detect a spectral range of around 1 octave with near constant sampling and good spectral resolution.

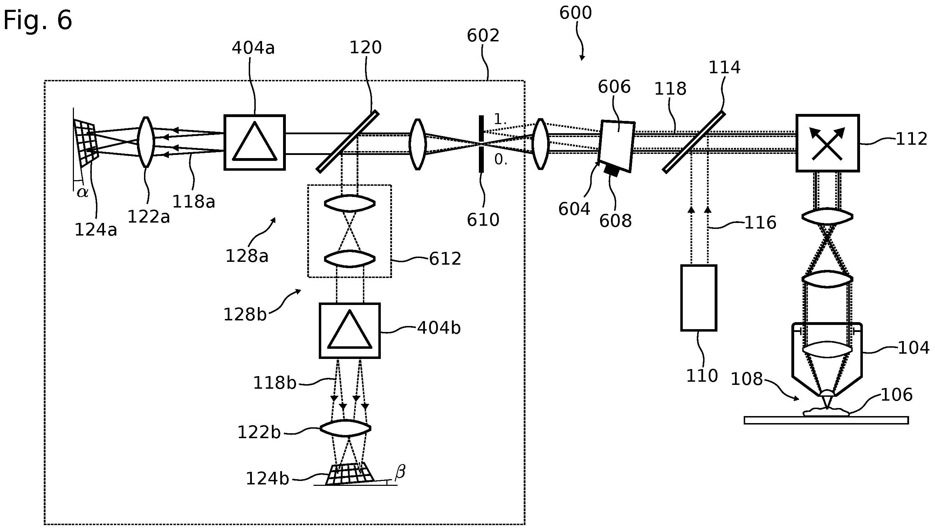

The detection light 118 may comprise fluorescence light generated by fluorophores that were excited by the excitation light 116. However, the detection light 118 may also comprise small amounts of excitation light 116, which have been reflected in the sample space 108, for example. This excitation light 116 may leak through the main beam splitter 114 into the detection arrangement 102, or, in other words, leak into the detection arrangement 102. An embodiment which addresses this leaking of excitation light 116 is described below with reference to Figure 6.

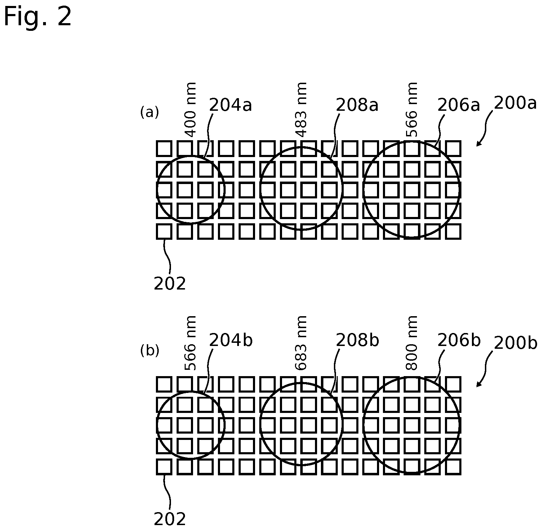

Figure 2a is a schematic view of a surface 200a of the first array detector 124a of the detection arrangement 102 according to Figure 1. Figure 2b is a schematic view of a surface 200b of the second array detector 124b of the detection arrangement 102 according to Figure 1. The surface 200a of the first array detector 124a comprises an array of pixels 202 formed by a photodetector element each. Likewise, the surface 200b of the second array detector 124b also comprises an array of pixels 202 formed by a photodetector element each. The first and second array detectors 124a, 124b have a constant pixel pitch, which is the distance between neighboring pixels 202. Both the first and second array detectors 124a, 124b comprise an array of 5 by 15 pixels 202.

Figures 2a further shows three circles 204a, 206a, 208a, each circle 204a, 206a, 208a corresponding to the size of the Airy disk formed by an image of a point-like source of detection light 118 having a wavelength in the first wavelength range. Likewise, Figure 2b shows three circles 204b, 206b, 208b, where each circle 204b, 206b, 208b corresponds to the size of the Airy disk formed by the image of a point-like source of detection light 118 having a wavelength in the second wavelength range. Only as an example, the first wavelength range comprises wavelengths from 400 nm to 566 nm and the second wavelength range comprises wavelengths from 566 nm to 800 nm. The splitting wavelength of 566 nm corresponds to the geometric mean of 400 nm and 800 nm, which may be chosen for a dispersive element comprising a linear dispersion, e.g. a grating. This ensures that the ratio of smallest airy disk diameter to largest Airy disk diameter is equal for the first and second array detectors 124a, 124b. As can be seen from Figures 2a and 2b, the diameter of the smallest Airy disks (corresponding to 400 nm and 566 nm, respectively) is about 3 pixels 202. The diameter of the largest Airy disks (corresponding to 566 nm and 800 nm, respectively) is about 5 pixels 202.

This means that the first and second wavelength ranges can be captured with near constant sampling.

A first circle 204a in Figure 2a corresponds to the size of the Airy disk formed by the image of a point-like source of detection light 118 having a wavelength at the lower boundary of the first wavelength range (400 nm). The Airy disk corresponding to 400 nm is positioned at a leftmost position on the surface 200 of the first array detector 124a. A second circle 206a in Figure 2a corresponds to the size of the Airy disk formed by the image of a point-like source of detection light 118 having a wavelength at the upper boundary of the first wavelength range (566 nm). The Airy disk corresponding to 566 nm is positioned at a rightmost position on the surface 200 of the first array detector 124a. A third circle 208a in Figure 2a corresponds to the size of the Airy disk formed by the image of a point-like source of detection light 118 having a wavelength in the middle of the first wavelength range (483 nm). The Airy disk corresponding to 483 nm is arranged centrally between the Airy disk corresponding to 400 nm and the Airy disk corresponding to 566 nm.

A first circle 204b in Figure 2b corresponds to the size of the Airy disk formed by the image of a point-like source of detection light 118 having a wavelength at the lower boundary of the second wavelength range (566 nm). The Airy disk corresponding to 566 nm is positioned at a leftmost position on the surface 200 of the second array detector 124b. A second circle 206b in Figure 2b corresponds to the size of the Airy disk formed by the image of a point-like source of detection light 118 having a wavelength at the upper boundary of the first wavelength range (800 nm). The Airy disk corresponding to 800 nm is positioned at a rightmost position on the surface 200 of the second array detector 124b. A third circle 208b in Figure 2b corresponds to the size of the Airy disk formed by the image of a point-like source of detection light 118 having a wavelength in the middle of the second wavelength range (683 nm). The Airy disk corresponding to 683 nm is arranged centrally between the Airy disk corresponding to 566 nm and the Airy disk corresponding to 800 nm.

As can be seen in Figures 2a and 2b, the different wavelengths are well separated and can be easily distinguished, making it possible to detect the detection light 118 with high spectral resolution. Further, the Airy disks corresponding to different wavelengths are evenly distributed over the surfaces 200a, 200b of the first and second array detectors 124a, 124b. Thus, the detector surfaces 200a, 200b of the first and second array detectors 124a, 124b are fully utilized.

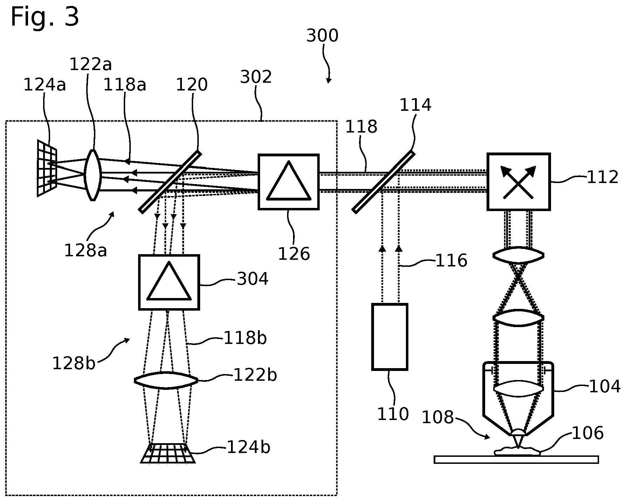

Figure 3 is a schematic view of an optical scanning microscope 300 having a detection arrangement 302 according to an embodiment. The optical scanning microscope 300 according to Figure 3 is distinguished from the optical scanning microscope 100 according to Figure 1 in that the detection arrangement 302 comprises a further dispersive element 304.

In the embodiment according to Figure 3, the further dispersive element 304 is exemplary arranged in the second beam path 128b between the beam splitting element 120 and the second focusing element 122b. However, the further dispersive element 304 may also be arranged in the first beam path 128a between the beam splitting element 120 and the first focusing element 122a. Further, the detection arrangement 302 may also include two further dispersive elements 304 arranged in the first and second beam paths 128a, 128b, respectively.

The further dispersive element 304 further modifies the spatial distribution of the second part 118b of the detection light 118, which has already been modified by the upstream dispersive element 126. For this purpose, the further dispersive element 304 may comprise one or more of the following: a dispersing prism, a planar grating, preferably a blazed grating, a grism, and a diffractive optical element. In an embodiment, the second wavelength range comprises larger wavelengths than the first wavelength range. In such an embodiment, the further dispersive element 304 may be used to increase the spectral separation between the wavelengths in the second wavelength range. This makes the spectral separation on the second array detector 124b more pronounced, thereby increasing the spectral resolution of the detection arrangement 302.

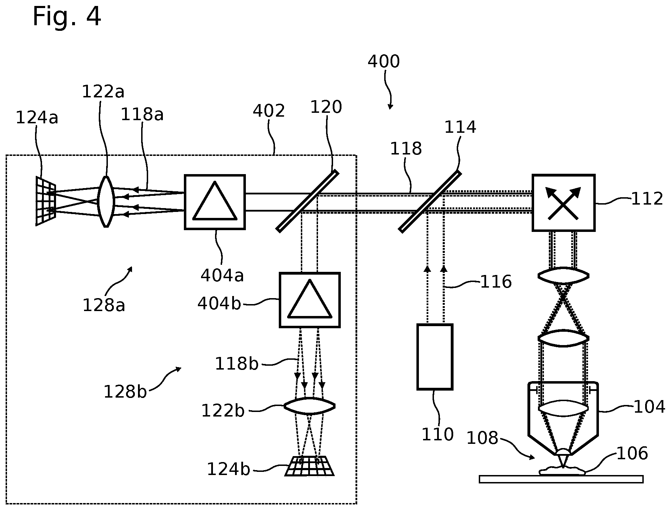

Figure 4 is a schematic view of the optical scanning microscope 400 having a detection arrangement 402 according to another embodiment. The optical scanning microscope 400 according to Figure 4 is distinguished from the optical scanning microscope 100 according to Figure 1 in that the detection arrangement 402 comprises a first dispersive element 404a and a second dispersive element 404b arranged in the first beam path 128a and the second beam path 128b, respectively. The first and second dispersive elements 404a, 404b may comprise one or more of the following: a dispersing prism, a planar grating, preferably a blazed grating, a grism, and a diffractive optical element.

In the embodiment shown in Figure 4, the detection arrangement 402 receives the detection light 118 via the beam splitting element 120. The detection light 118 is then split into the first and second parts 118a, 118b. The first part 118a of the detection light 118 is directed into the first beam path 128a, and the second part 118b of the detection light 118 is directed into the second beam path 128b. In the first beam path 128a, the first part 118a of the detection light 118 is directed into the first dispersive element 404a. The first dispersive element 404a spectrally separates the first part 118a of detection light 118 along a spectral separation direction by deflecting the first part 118a of the detection light 118 based on wavelength. The first focusing element 122a is arranged downstream of the first dispersive element 404a and focuses the first part 118a of the detection light 118 in order to form an image on the first array detector 124a. Likewise, in the second beam path 128b, the second part 118b of the detection light 118 is directed into the second dispersive element 404b. The second dispersive element 404b spectrally separates the second part 118b of detection light 118 along a spectral separation direction by deflecting the second part 118b of the detection light 118 based on wavelength. The second focusing element 122b is arranged downstream of the second dispersive element 404b and focuses the second part 118b of the detection light 118 in order to form an image on the second array detector 124b.

In the detection arrangement 402 according to Figure 4, the first and second dispersive elements 404a, 404b fulfill the role of the upstream dispersive element 126 in the detection arrangement 102 according to Figure 1. By providing a dedicated dispersive element for each of the first and second beam paths 128a, 128b, it is possible to adapt the first and second dispersive elements 404a, 404b to the requirements specific to detecting the first and second wavelength ranges. In an embodiment, the second wavelength range comprises larger wavelengths than the first wavelength range. In such an embodiment, the second dispersive element 404b may exhibit a stronger dispersion, making the spectral separation more pronounced for longer wavelengths. This counteracts, for example, the non-linear dispersive behavior of a dispersing prism, which exhibits a weaker dispersion at longer wavelengths.

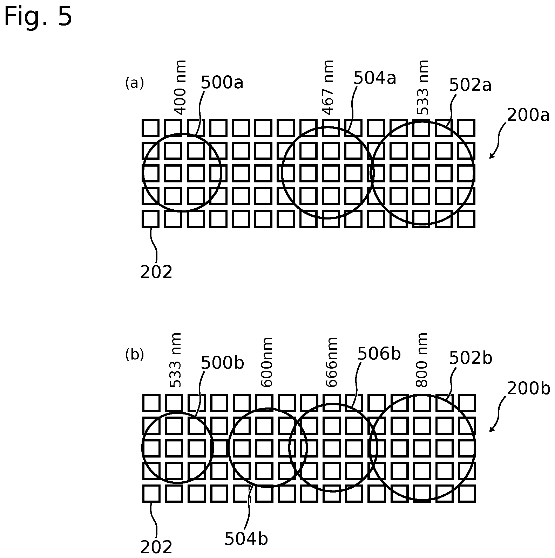

Figure 5a is a schematic view of the surface 200a of the first array detector 124a of the detection arrangement 402 according to Figure 4. Figure 5b is a schematic view of a surface 200b of the second array detector 124b of the detection arrangement 402 according to Figure 4. The surfaces 200a, 200b of the first and second array detectors 124a, 124b each comprise an array of 5 by 15 pixels 202, and have a constant pixel pitch. Each pixel is formed by a photodetector element.

Figure 5a shows three circles 500a, 502a, 504a, where each circle 500a, 502a, 504a corresponds to the sizes of the Airy disks formed by images of a point-like source of detection light 118 having a wavelength in the first wavelength range. Figure 5b shows four circles 500b, 502b, 504b, 506b, each circle 500b, 502b, 504b, 506b corresponding to the size of the Airy disk formed by the image of a point-like source of detection light 118 having a wavelength in the second wavelength range. Only as an example, the first wavelength range comprises wavelengths from 400 nm to 533 nm and the second wavelength range comprises wavelengths from 533 nm to 800 nm. The splitting wavelength of 533 nm was chosen in this embodiment, because nonlinear dispersive elements (prisms) are used (different prisms in first and second beam path 128a, 128b). The splitting wavelength of 533nm was chosen, such that the airy discs at the arithmetic mean of each wavelength range (467nm and 667nm respectively) have (approximately) the same separation from the airy discs of the largest wavelength for each detector (533nm and 800nm, respectively). As can be seen from Figures 5a and 5b, the diameter of the smallest Airy disk (corresponding to 400 nm and 533 nm, respectively) is about 3 pixels 202. The diameter of the largest Airy disk (corresponding to 533 nm and 800 nm, respectively) is about 5 pixels 202. This means that the first and second wavelength ranges can be captured with near constant sampling using the detection arrangement 102 according to Figure 4 as well.

A first circle 500a in Figure 5a corresponds to the size of the Airy disk formed by the image of a point-like source of detection light 118 having a wavelength at the lower boundary of the first wavelength range (400 nm). The Airy disk corresponding to 400 nm is positioned at a leftmost position on the surface 200 of the first array detector 124a. A second circle 502a in Figure 5a corresponds to the size of the Airy disk formed by the image of a point-like source of detection light 118 having a wavelength at the upper boundary of the first wavelength range (533 nm). The Airy disk corresponding to 533 nm is positioned at a rightmost position on the surface 200 of the first array detector 124a. A third circle 504a in Figure 5a corresponds to the size of the Airy disk formed by the image of a point-like source of detection light 118 having a wavelength in the middle of the first wavelength range (467 nm). The Airy disk corresponding to 467 nm is arranged between the Airy disk corresponding to 400 nm and the Airy disk corresponding to 533 nm.

A first circle 500b in Figure 5b corresponds to the size of the Airy disk formed by the image of a point-like source of detection light 118 having a wavelength at the lower boundary of the second wavelength range (533 nm). The Airy disk corresponding to 533 nm is positioned at a leftmost position on the surface 200 of the second array detector 124b. A second circle 502b in Figure 5b corresponds to the size of the Airy disk formed by the image of a point-like source of detection light 118 having a wavelength at the upper boundary of the first wavelength range (800 nm). The Airy disk corresponding to 800 nm is positioned at a rightmost position on the surface 200 of the second array detector 124b. A third circle 504b and a fourth circle 506b in Figure 5b correspond to the sizes of the Airy disks formed by the image of a point-like source of detection light 118 having wavelengths in the middle of the second wavelength range (600 nm and 666 nm, respectively). The Airy disks corresponding to 600 nm and 666 nm are arranged between the Airy disk corresponding to 533 nm and the Airy disk corresponding to 800 nm.

As can be seen in Figures 5a and 5b, the different wavelengths are well separated and can be easily distinguished despite the non-linear relationship between the wavelength and the spatial position of the Airy disks on the first and second array detectors 124a, 124b, making it possible to detect the detection light 118 with high spectral resolution. Further, the Airy disk corresponding to different wavelengths are evenly distributed over the surface 200a, 200b of the first and second array detectors. Thus, the detector surface 200a, 200b of the first and second array detectors 124a, 124b are fully utilized.

Figure 6 is a schematic view of the optical scanning microscope 600 having a detection arrangement 602 according to another embodiment. The optical scanning microscope 600 according to Figure 6 is distinguished from the optical scanning microscope 400 according to Figure 4 in comprising an acousto-optical tunable filter 604.

The acousto-optical tunable filter 604 is exemplary arranged downstream of the main beam splitter 114. However, the acousto-optical tunable filter 604 may also be a part of the main beam splitter 114, which may be formed as an acousto-optical main beam splitter. The acousto-optical tunable filter 604 comprises an acousto-optical medium 606, and a transducer 608. A radio frequency applied to the transducer 608 generates sound waves in the acousto-optical medium 606, which locally affect the refractive index of the acousto-optical medium 606. This anisotropy of the refractive index creates a refractive grating in the acousto-optical medium 606 whose properties are determined by the radio frequency applied to the transducer 608. This refractive grating causes a diffraction of the light entering the acousto-optical tunable filter 604 into multiple orders based on the frequency and amplitude of the acoustic waves, and thus the radio frequency applied to the transducer 608.

In the present embodiment of the optical scanning microscope 600, the acousto-optical tunable filter 604 is used to selectively deflect a part of the detection light 118 away from the detection arrangement 602, for example by directing the part of the detection light 118 into a beam dump or away from an opening of a pinhole 610. For example, wavelengths of the excitation light 116 may be deflected away from the detection arrangement 602, preventing the excitation wavelength from leaking into the detection arrangement 602. Similarly, the acousto-optical tunable filter 604 may be operated to let only detection light 118 with predetermined wavelengths pass into the detection arrangement 602, for example the emission wavelengths of one or more specific fluorophores arranged in the sample 106.

The detection arrangement 602 according to Figure 6 is distinguished from the detection arrangement 402 shown in Figure 4 in comprising the pinhole 610, and a magnification system 612. The pinhole 610 blocks detection light 118 deflected by the acousto-optical tunable filter 604. In addition, the pinhole 610 also acts as a spatial filter that excludes out-of-focus light, thereby only allowing detection light 118 originating from the focus region of the objective lens 104 to pass on into the detection arrangement 602.

The magnification system 612 is exemplary arranged in the second beam path 128b. The magnification system 612 may also be arranged in the first beam path 128a.

Further, the detection arrangement 602 may also include two magnification systems 612 arranged in the first and second beam paths 128a, 128b, respectively. The magnification system 612 is configured to modify a beam diameter. Since the magnification system 612 is arranged in the second beam path 128b, the magnification system 612 may be used to adjust the beam diameter at the dispersive element downstream the magnification system 612. The beam diameter at the dispersive element influences the spectral resolution.

The detection arrangement 602 according to Figure 6 is further distinguished from the detection arrangement 602 shown in Figure 4 in that the surface 200a of the first array detector 124a is tilted by an angle α such that a surface normal of the surface 200a and the optical axis of the first beam path 128a enclose a non-zero angle, and in that the surface 200b of the second array detector 124b is tilted by an angle β such that a surface normal of the surface 200b and the optical axis of the second beam path 128b enclose a non-zero angle. The tilt of the first and second array detectors 124a, 124b counteracts chromatic aberrations due to the deflection of the detection light 118 by the first and second dispersive elements 404a, 404b or other axial chromatic aberrations of the overall optical scanning microscope 600.

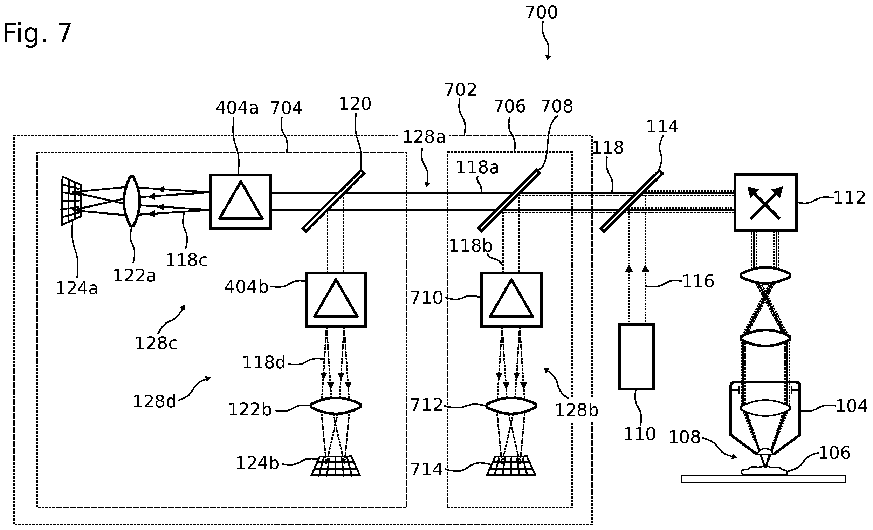

Figure 7 is a schematic view of the optical scanning microscope 700 having a cascaded detection arrangement 702 according to an embodiment. The cascaded detection arrangement 702 comprises a final detection arrangement 704 and a remaining detection arrangement 706. The cascaded detection arrangement 702 exemplary comprises only one remaining detection arrangement 706. Additional remaining detection arrangements 706 may be arranged between the one remaining detection arrangement 706 and the final detection arrangement 704.

The one remaining detection arrangement 706 is arranged upstream of the final detection arrangement 704 and receives the descanned detection light 118 from the main beam splitter 114 of the optical scanning microscope 700. The detection light 118 is directed onto a beam splitting element 708 of the remaining detection arrangement 706, which splits the detection light 118 into a first part 118a comprising a first wavelength range and a second part 118b comprising a second wavelength range. The first part 118a of the detection light 118 is directed into a first beam path 128a towards the final detection arrangement 704. The second part 118b of the detection light 118 is directed into a second beam path 128b. The second beam path 128b comprises a dispersive element 710, a focusing element 712 and an array detector 714. The dispersive element 710 spectrally separates the second part 118b of detection light 118 along a spectral separation direction by deflecting the second part 118b of the detection light 118 based on wavelength. The focusing element 712 is arranged downstream of the dispersive element 710 and focuses the second part 118b of the detection light 118 in order to form an image on the array detector 714. The dispersive element 710 may comprise at least one of a dispersing prism, a planar grating, preferably a blazed grating, a grism, and a diffractive optical element.

The final detection arrangement 704 is arranged in the first beam path 128a of the remaining detection arrangement 706. Accordingly, the final detection arrangement 704 receives the first part 118a of the detection light 118 passed on by the remaining detection arrangement 706. The final detection arrangement 704 comprises the beam splitting element 120, the first dispersive element 404a, the first focusing element 122a, the first array detector 124a, the second dispersive element 404b, the second focusing element 122b, and the second array detector 124b. As can be seen from Figure 7, the final detection arrangement 704 is similar to the detection arrangement 402 of the optical scanning microscope 400 according to Figure 4. As part of the cascaded detection arrangement 702, the role of the descanned detection light 118 is fulfilled by the first part 118a of the detection light 118 passed on by the remaining detection arrangement 706.

The beam splitting element 120 splits the first part 118a of the detection light 118 into a third part 118c comprising a third wavelength range, and fourth part 118d comprising a fourth wavelength range. The third and fourth wavelength ranges are different. Both the third and fourth wavelength ranges are subsets of the first wavelength range. The third part 118c of the detection light 118 is directed into a third beam path 128c and the fourth part 118d of the detection light 118 is directed into a fourth beam path 128d. The third beam path 128c comprises the first dispersive element 404a, the first focusing element 122a and the first array detector 124a. The fourth beam path 128d comprises the second dispersive element 404b, the second focusing element 122b and the second array detector 124b. In the third beam path 128c, the first dispersive element 404a spectrally separates the third part 118c of detection light 118 along a spectral separation direction by deflecting the third part 118c of the detection light 118 based on wavelength. The first focusing element 122a is arranged downstream of the first dispersive element 404a and focuses the third part 118c of the detection light 118 in order to form an image on the first array detector 124a. Likewise, in the fourth beam path 128d, the second dispersive element 404b spectrally separates the fourth part 118d of detection light 118 along a spectral separation direction by deflecting the fourth part 118d of the detection light 118 based on wavelength. The second focusing element 122b is arranged downstream of the second dispersive element 404b and focuses the fourth part 118d of the detection light 118 in order to form an image on the second array detector 124b.

The cascaded detection arrangement 702 enables the detection of more than two wavelength ranges. This makes it possible to adapt both optical elements in the beam paths and the array detectors more specifically to the investigated wavelength ranges. This in turn further increases the spectral resolution and specificity.

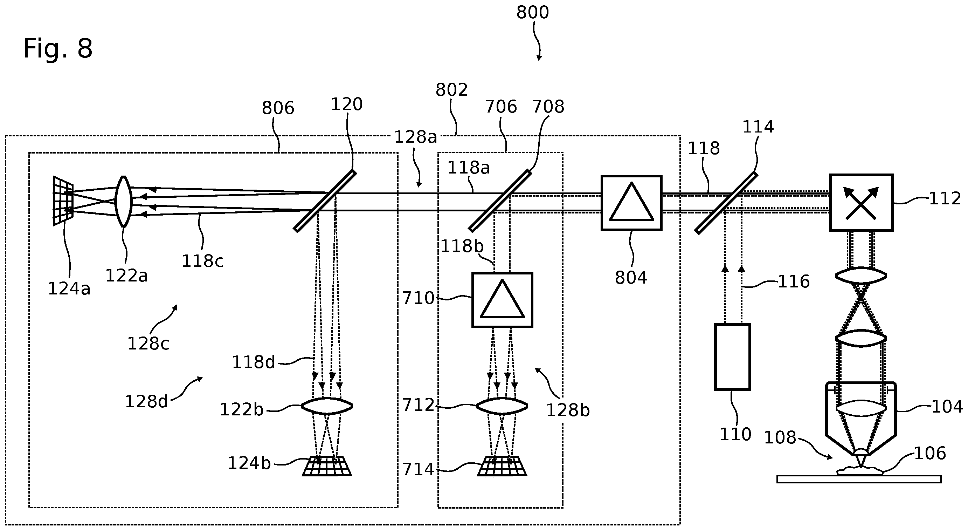

Figure 8 is a schematic view of the optical scanning microscope 800 having a cascaded detection arrangement 802 according to an embodiment. The cascaded detection arrangement 802 comprises an upstream dispersive element 804.

The upstream dispersive element 804 is arranged upstream of the remaining detection arrangement 706 and is configured to spectrally separate the descanned detection light 118 received from the main beam splitter 114 of the optical scanning microscope 800 along a spectral separation direction by deflecting the detection light 118 based on wavelength. For this purpose, the upstream dispersive element 804 may comprise at least one of a dispersing prism, a planar grating, preferably a blazed grating, a grism, and a diffractive optical element. The spectrally separated detection light 118 is then directed in the remaining detection arrangement 706. The first part 118a of the detection light 118 is passed on by the remaining detection arrangement 706 and then received by the final detection arrangement 806, which in the embodiment according to Figure 8 does not comprise the dispersive elements 404a, 404b. While the cascaded detection arrangement 702 shown in Figure 7 may be seen as an extension of the detection arrangement 402 shown in Figure 4, the cascaded detection arrangement 802 shown in Figure 8 may be seen as an extension of the detection arrangement 102 shown in Figure 1.

In the case of multiple dispersive elements, the dispersion directions of the dispersive elements can be compared, when they are imaged backwards into the sample space. There, the dispersion directions define an angle between each other.

In general, the angle between the dispersion directions can be chosen arbitrarily, as this is described in the EP application with the application number EP24178841.3, the complete content thereof being incorporated herein by reference. In contrast thereto, in which amongst others a wavelength-insensitive beamsplitter is used to create copies of the same wavelength bands, there is no benefit in choosing a certain angle between the dispersion directions, since the wavelength bands in the present document are treated separately.

However, the example in Fig. 3 is an exception. Here, the angle between the dispersion directions should be chosen either zero degrees or 180 degrees, because the dispersive elements act in concatenation. Both angles (zero or 180 degrees) can be useful to create a linearized dispersion behavior in total.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Optical scanning microscope
- 102: Detection arrangement
- 104: Objective lens
- 106: Sample
- 108: Sample space
- 110: Excitation unit
- 112: Scanning unit
- 114: Main beam splitter
- 116: Excitation light
- 118: Detection light
- 118a, 118b, 118c, 118d: Part
- 120: Beam splitting element
- 122a, 122b: Focusing element
- 124a, 124b: Array detector
- 126: Dispersive element
- 128a, 128b: Beam path
- 200a, 200b: Surface
- 202: Pixel
- 204a, 204b, 206a, 206b, 208a, 208b: Circle
- 300: Optical scanning microscope
- 302: Detection arrangement
- 304: Dispersive element
- 400: Optical scanning microscope
- 402: Detection arrangement
- 404a, 404b: Dispersive element
- 500a, 502a, 504a, 500b, 502b, 504b, 506b: Circle
- 600: Optical scanning microscope
- 602: Detection arrangement
- 604: Acousto-Optical tunable filter
- 606: Acousto-optical medium
- 608: Transducer
- 610: Pinhole
- 612: Magnification system
- 700: Optical scanning microscope
- 702: Cascaded detection arrangement
- 704, 706: Detection arrangement
- 708: Beam splitting element
- 710: Dispersive element
- 712: Focusing element
- 714: Array detector
- 800: Optical scanning microscope
- 802: Cascaded detection arrangement
- 804: Dispersive element
- 806: Detection arrangement

## Claims

1. A detection arrangement (102, 302, 806) for an optical scanning microscope (100, 300, 400, 600, 700, 800), the detection arrangement (102, 302, 806) comprising
a beam splitting element (120) configured to receive descanned detection light (118), to direct a first part (118a) of the detection light (118) having a first wavelength range into a first beam path (128a), and to direct a second part (118b) of the detection light (118) having a second wavelength range different from the first wavelength range into a second beam path (128b);
the first beam path (128a) comprising a first array detector (124a) configured to receive the first part (118a) of the detection light (118);
the second beam path (128b) comprising a second array detector (124b) configured to receive the second part (118b) of the detection light (118); and
an upstream dispersive element (126, 804) arranged upstream of the beam splitting element (120) and configured to spectrally separate the descanned detection light (118).

2. The detection arrangement (302, 806) according to claim 1, comprising at least one further dispersive element (304), wherein the at least one further dispersive element (304) is arranged in the first beam path (128a) and configured to spectrally separate the first part (118a) of the detection light (118); or
wherein the at least one further dispersive element (304) is arranged in the second beam path (128b) and configured to spectrally separate the second part (118b) of the detection light (118).

3. A detection arrangement (402, 602, 704) for an optical scanning microscope (100, 300, 400, 600, 700, 800), the detection arrangement (402, 602, 704) comprising
a beam splitting element (120) configured to receive descanned detection light (118), to direct a first part (118a) of the detection light (118) having a first wavelength range into a first beam path (128a), and to direct a second part (118b) of the detection light (118) having a second wavelength range different from the first wavelength range into a second beam path (128b);
the first beam path (128a) comprising a first dispersive element (404a) configured to spectrally separate the first part (118a) of the detection light (118), and a first array detector (124a) configured to receive the spectrally separated first part (118a) of the detection light (118); and
the second beam path (128b) comprising a second dispersive element (404b) configured to spectrally separate the second part (118b) of the detection light (118), and a second array detector (124b) configured to receive the spectrally separated second part (118b) of the detection light (118).

4. The detection arrangement (102, 302, 402, 602, 704, 806) according to any one of the preceding claims, wherein the first beam path (128a) comprises at least one first focusing element (122a) configured to focus the first part (118a) of the detection light (118) onto the first array detector (124a); and/or
wherein the second beam path (128b) comprises at least one second focusing element (122b) configured to focus the second part (118b) of the detection light (118) onto the second array detector (124b).

5. The detection arrangement (102, 302, 402, 602, 704, 806) according to claim 4, wherein a first focal length of the at least one first focusing element (122a) is shorter than a second focal length of the at least one second focusing element (122b); or
wherein the first focal length of the at least one first focusing element (122a) is longer than the second focal length of the at least one second focusing element (122b).

6. The detection arrangement (602) according to any one of the preceding claims, wherein the first beam path (128a) comprises a first magnification system (612) configured to adjust a beam diameter in the first beam path (128a); and/or
wherein the second beam path (128b) comprises a second magnification system (612) configured to adjust a beam diameter in the second beam path (128b).

7. The detection arrangement (602) according to any one of the preceding claims, wherein the first array detector (124a) comprises a first detector surface (200a) and a surface normal of the first detector surface (200a) is tilted by a first angle different from zero with respect to an optical axis in the first beam path (128a); and/or
wherein the second array detector (124b) comprises a second detector surface (200b) and a surface normal of the second detector surface (200b) is tilted by a second angle different from zero with respect to an optical axis in the second beam path (128b).

8. The detection arrangement (102, 302, 402, 602, 704, 806) according to any one of the preceding claims, wherein the first wavelength range comprises a first lower boundary, for example at 400 nm, and a first upper boundary, for example at 533 nm or 566 nm; and/or wherein the second wavelengths range comprises a second lower boundary, for example at 533 nm or 566 nm, and a second upper boundary, for example at 800 nm.

9. The detection arrangement (602) according to any one of the preceding claims, comprising a spatial filter (610) arranged upstream of the beam splitting element (120).

10. The detection arrangement (102, 302, 402, 602, 704, 806) according to any one of the preceding claims, wherein at least one of the first array detector (124a) and the second array detector (124b) comprises at least one time resolved detector element configured to detect a photon arrival time and/or wherein the detection arrangement (402, 602, 704) is configured to simultaneously detect the first part (118a) of the detection light (118) with the first array detector (124a) and to detect the second part (118b) of the detection light (118) with the second array detector (124b).

11. The detection arrangement (102, 302, 402, 602, 704, 806) according to any one of the preceding claims, wherein at least one of the upstream dispersive element (126, 804), the further dispersive element (304), the first dispersive element (404a), and the second dispersive element (404b) comprises at least one of a dispersing prism, a planar grating, preferably a blazed grating, a grism, and a diffractive optical element.

12. A cascaded detection arrangement (702, 802), comprising at least two detection arrangements (704, 706, 806) arranged in sequence, each detection arrangement (706) except a final detection arrangement (704, 806) being arranged in a first beam path (128a) of the preceding detection arrangement (706);
wherein the final detection arrangement (704, 806) is the detection arrangement (102, 302, 402, 602, 704, 806) according to any one of the preceding claims;
wherein the remaining detection arrangements (706) each comprise a beam splitting element (708) configured to receive light, which is either the descanned detection light (118) or a part thereof, to direct a first part (118a) of the received light having a first wavelength range into a first beam path (128a), and to direct a second part (118b) of the received light having a second wavelength range different from the first wavelength range into a second beam path (128b);
wherein the second beam path (128b) of each of the remaining detection arrangements (706) comprises an array detector (714) configured to receive the spectrally separated second part (118b) of the received light; and
wherein the second beam path (128b) of at least one of the remaining detection arrangements (706) comprises a dispersive element (710) configured to spectrally separate the second part (118b) of the received light; and/or
wherein the cascaded detection arrangement (802) comprises an upstream dispersive element (804) arranged upstream of the beam splitting element (120) of a first of the remaining detection arrangements (706) and configured to spectrally separate the descanned detection light (118).

13. An optical scanning microscope (100, 300, 400, 600, 700, 800), comprising
an excitation light source (110) configured to generate excitation light (116);
an objective lens (104) directed at a sample space (108) and configured to direct the excitation light (116) into the sample space (108) and to receive detection light (118) from the sample space (108);
a scanning unit (112) arranged along a beam path between the excitation light source (110) and the objective lens (104) and configured to selectively direct the excitation light (116) into different regions of the sample space (108) via the objective lens (104);
the detection arrangement (102, 302, 402, 602) according to any one of the claims 1 to 11 or the cascaded detection arrangement (702, 802) according to claim 12; and
a main beam splitter (114) configured to direct the excitation light (116) into the objective lens (104) via the scanning unit (112), and to direct the detection light (118) into the detection arrangement (102, 302, 402, 602) or the cascaded detection arrangement (702, 802).

14. The optical scanning microscope (600) according to claim 13, wherein the main beam splitter (114) comprises at least one of an acousto-optical beam splitter, an acousto-optical tunable filter (604) and a dichroic beam splitter.

15. The optical scanning microscope (100, 300, 400, 600, 700, 800) according to claim 13 or 14, wherein the excitation light source (110) comprises a super-continuum laser and/or multiple single-wavelength lasers.
